Europäisches Patentamt

European Patent Office

Office européen des brevets

(11) Veröffentlichungsnummer: **0 258 768 B1**

# EUROPÄISCHE PATENTSCHRIFT

(45) Veröffentlichungstag der Patentschrift: **04.12.91**

(51) Int. Cl.5: **G11B 5/84**, G11B 5/704

(21) Anmeldenummer: **87112203.2**

(22) Anmeldetag: **22.08.87**

(54) **Verfahren zur Oberflächenbearbeitung schiebenförmiger vernickelter Aluminiumsubstrate.**

(30) Priorität: **30.08.86 DE 3629582**

(43) Veröffentlichungstag der Anmeldung:
**09.03.88 Patentblatt 88/10**

(45) Bekanntmachung des Hinweises auf die
Patenterteilung:
**04.12.91 Patentblatt 91/49**

(84) Benannte Vertragsstaaten:
**DE FR GB NL**

(56) Entgegenhaltungen:
**DE-A- 3 445 001**
**DE-A- 3 601 848**
**DE-C- 425 827**

(73) Patentinhaber: **BASF Aktiengesellschaft**
**Carl-Bosch-Strasse 38**
**W-6700 Ludwigshafen(DE)**

(72) Erfinder: **Richter, Juergen, Dr.**
**Rheinecke 34**
**W-6700 Ludwigshafen(DE)**
Erfinder: **Grau, Werner, Dr.**
**Tuchbleiche 5**
**W-6712 Bobenheim-Roxheim(DE)**
Erfinder: **Maurer, Gerd, Prof. Dr.**
**Am Muehlpfad 10**
**W-6750 Kaiserslautern 31(DE)**
Erfinder: **Domas, Friedrich**
**Hasenweg 4**
**W-6822 Altlussheim(DE)**
Erfinder: **Loeser,Werner,Dr.**
**Klagenfurter Strasse 16**
**W-6700 Ludwigshafen(DE)**
Erfinder: **Bender, Rainer, Dr.**
**Reinhold-Schneider-Weg**
**W-7602 Oberkirch(DE)**
Erfinder: **Schulze, Axel-Ruediger, Dr.**
**Untere Au 15**
**W-7600 Offenburg(DE)**
Erfinder: **Doerr, Kurt, Dr.**
**Maximilianstrasse 2 a**
**W-6800 Mannheim 1(DE)**

## Beschreibung

Die Erfindung betrifft ein Verfahren zur Oberflächenbearbeitung von scheibenförmigen vernickelten Aluminiumsubstraten, die bei der Herstellung von, eine magnetisierbare metallische Schicht aufweisenden magnetischen Aufzeichnungsplatten als Trägermaterial verwendet werden.

Magnetische Aufzeichnungsplatten auf der Basis eines starren Trägermaterials, das üblicherweise aus einer Aluminiumlegierung besteht, werden vorwiegend zur Datenspeicherung eingesetzt. Seit langem bekannt und vorwiegend eingesetzt werden Magnetspeicherplatten, deren Aufzeichnungsschicht im wesentlichen aus einem in einer Bindemittelmatrix feinverteilten magnetischem Material besteht. Die stetige Erhöhung der Flächenspeicherdichte von Magnetplatten erfordert jedoch eine entsprechende Verringerung der Schichtstärke der Aufzeichnungsschicht bei einer gleichzeitigen Erhöhung der Koerzitivfeldstärke. Diese Anforderungen können in zunehmendem Maße nicht mehr mit Dispersionsschichten bewerkstelligt werden. Da es technisch sehr schwierig ist, homogene Dispersionsschichten mit einer gleichmäßigen Schichtdicke von unter 0,5 µm zu festigen, sind neue Beschichtungstechnologien und neue magnetische Materialien erforderlich, die eine Herstellung sehr dünner Magnetschichten mit homogener Mikrostruktur und hoher Oberflächenglätte ermöglichen. Hierfür haben sich chemische und elektrochemische Abscheidung sowie Aufdampfen und Sputtern geeigneter Metalle bzw. Legierungen angeboten. Die magnetischen Eigenschaften von dünnen Schichten sind im allgemeinen von der Zusammensetzung, Mikrostruktur und Schichtdicke bestimmt. Zudem sind Oberflächenrauhigkeit und innere Spannungen im Film von Bedeutung.

Inzwischen werden bei kommerziell eingesetzten Dünnschicht-Magnetplatten chemisch abgeschiedene kohärente Co-P-Magnetschichten eingesetzt. Diese Schichten erlauben bei einer Schichtdicke von unter 100 nm die Einstellung einer sehr hohen Koerzitivfeldstärke von 40 bis zu 80 kA/m und einer hohen relativen Remanenz von über 0,8 in der Schichtebene. Sie bestehen aus hexagonal geordneten (Co-P)-Kristalliten in einer amorphen (Co-P)-Matrix.

Zur Herstellung dieser Dünnschicht-Magnetplatten werden Aluminium-Substrate in einem ersten Schritt auf chemischem Wege mit einer etwa 20 µm dicken, harten und unmagnetischen amorphen (Ni-P)-Unterschicht mit einem P-Gehalt von 15 bis 20 Atom-% beschichtet, wobei kleine Substratdefekte ausgeglichen werden können. Die hohe Härte der Unterschicht verbessert die tribologischen Eigenschaften der Magnetplatte bezüglich des Magnetkopfs und ermöglicht in einem sich anschließenden Obverflächenbearbeitungsschritt die Einstellung einer definierten Oberflächenrauhigkeit, die für ein reproduzierbares Flugverhalten des Magnetkopfs erforderlich ist. Außerdem weist die (Ni-P)-Oberfläche für die sich anschließende (Co-P)-Beschichtung durch Eintauchen in ein metastabiles, chemisches Bad eine ausreichend hohe katalytische Aktivität auf, so daß auf eine zusätzliche Oberflächenbekeimung mit abscheidungsfördernden Fremdelementen, z.B. Pd, verzichtet werden kann. Weiterhin begünstigt die korngrenzenfreie amorphe Struktur des Ni-P eine homogene Mikrostruktur der aufwachsenden dünnen (Co-P)-Schicht.

Damit wird durch die Oberflächenbeschaffenheit der vernickelten Aluminiumsubstrate ein wesentlicher Einfluß auf die Brauchbarkeit der Magnetschichten ausgeübt. An die Oberfläche werden hinsichtlich Sauberkeit und gleichmäßiges sowie definiertes Rauhigkeitsprofil hohe Anforderungen gestellt, damit eine einwandfreie chemische Abscheidung der magnetischen Metallschicht auf dem Substrat sowie die erforderlichen mechanischen Eigenschaften der entsprechenden Metallschichtplatten gewährleistet sind. Die Oberflächenbearbeitung erfolgt derzeit dadurch, daß in einem ersten Arbeitsgang die vernickelten Aluminiumsubstrate poliert werden, um lokale Unebenheiten, wie Spitzen und Löcher, zu beseitigen, Daraufhin werden zur Beseitigung der die nachfolgende Texturierung störenden Poliermittelreste die Substrate gereinigt und getrocknet. Dann werden die gereinigten Substrate zur Erzielung einer definierten Rauhigkeit in bekannter Weise in einer Richtung, die im wesentlichen mit der Aufzeichnungsrichtung der Informationsspeicherung übereinstimmt, d.h. zirkular texturiert (DE-A 36 01 848). Anschließend müssen die Substrate wieder gereinigt und getrocknet werden, bevor schließlich die beim Texturieren entstandenen einzelnen Spitzen mit einem feinen Schleifpapier von Hand entfernt werden. Nach einem letzten Reinigungsschritt können die vernickelten Substrate mit der Magnetschicht versehen werden.

Es bestand nun die Aufgabe, die Oberflächenbehandlung von für die Herstellung von Dünnschicht-Magnetplatten geeigneten scheibenförmigen vernickelten Aluminiumsubstrate zu verbessern, daß sowohl eine Verminderung der nötigen Bearbeitungsschritte als auch eine Verbesserung des Bearbeitungsergebnisses und somit eine Erhöhung der Ausbeute an Dünnschicht-Magnetplatten erreicht wird.

Es wurde nun gefunden, daß sich die Oberflächenbearbeitung scheibenförmiger vernickelter Aluminiumsubstrate, welche als Trägermaterialien für die Herstellung von eine magnetisierbare Kobalt-Phosphor-Schicht aufweisende Metallschichtplatten geeignet sind, durch Polieren und Texturieren der Nickelschicht auf eine Rauhtiefe $R_t$ von 0,04 bis 0,1

μm, eine gemittelte Rauhtiefe $R_z$ von 0,04 bis 0,1 μm und einen Mittenrauhwert $R_a$ von 0,0065 bis 0,0095 μm aufgabengemäß verbessern läßt, wenn die vernickelte Aluminiumscheibe in einem beidseitig läppolierenden Automaten mit einen Poliermittel bei einem Oberflächenabtrag von 2,0 bis 4,0 μm je Seite auf einen Mittenrauhwert $R_a$ von 0,004 bis 0,006 μm zuerst poliert wird und unmittelbar danach im gleichen Automaten texturiert wird unter Verwendung eines Poliermittels, das gegenüber dem zuerst eingesetzten die 3- bis 10-fache Körnung aufweist, zur Ausbildung einer im wesentlichen schaufelradförmigen Struktur mit dicht nebeneinanderliegenden Kratzern, die vom Zentrum des Substrates in einem Kreisbogenähnlichen Verlauf nach außen zum Umfang der Scheibe hin ausgerichtet sind.

Texturieren im Sinne der Erfindung bedeutet das Aufbringen von dicht nebeneinander liegenden Kratzern mit definiertem Verlauf sowie definierter Dichte und Tiefe auf die Oberfläche polierter scheibenförmiger, vernickelter Aluminiumsubstrate. Tiefe und Dichte der Kratzeranordnung sind durch die Rauhtiefe $R_t$ (nach DIN 4768), die gemittelte Rauhtiefe $R_z$ (nach DIN 4768) sowie den Mittenrauhwert ($R_a$ nach DIN 4768) definiert.

Zur Durchführung des erfindungsgemäßen Verfahrens werden die nach dem Stand der Technik (z.B. gemäß US-A 4 224 381) vernickelten scheibenförmigen Aluminiumsubstrate zur Beseitigung lokaler Unebenheiten auf der Substratoberfläche mittels eines sogenannten doppelseitigen läppolierenden Automaten poliert (vgl. DE-A-3445001).

Die Substrate befinden sich hierbei zwischen zwei gleichsinnig rotierenden mit Poliertuch versehenen Polierringen und werden mit Poliermittel beaufschlagt. Zur Erzielung einer möglichst glatten Oberfläche mit einem Mittenrauhwert $R_a$ von 0,004 bis 0,006 μm wird ein weiches Poliertuch und ein Poliermittel, bei dem der Abtrag mechanisch und chemisch erfolgt, verwendet. Das Poliermittel ist handelsüblich und besteht im wesentlichen aus Aluminiumoxid, Siliciumkarbid oder Diamant und weist eine mittlere Körnung zwischen 0,2 und 0,5 μm auf. Durch das Polieren werden zwischen 2 und 4μm der Nickelschicht abgetragen.

Das Texturieren erfolgt unmittelbar nach dem Polieren, d.h. ohne Entnahme des Substrats aus dem Automaten. Hierzu wird ein grobes Schleifkorn, das die 3- bis 10-fache Körnung des anfänglich eingesetzten Poliermittels aufweist, eingesetzt, so daß nach einer Behandlungsdauer von 15 bis 50 sec die Nickelschicht eine Rauhtiefe $R_t$ von 0,04 bis 0,1 μm, eine gemittelte Rauhtiefe $R_z$ von 0,04 bis 0,1 μm und einen Mittenrauhwert $R_a$ von 0,0065 bis 0,0095 μm zeigt. Die nach dem erfindungsgemäßen Verfahren erzeugte Textur zeigt eine im wesentlichen schaufelradförmige Struktur.

Das bedeutet, daß die dicht nebeneinanderliegenden Kratzer vom Zentrum des scheibenförmigen Substrats in einem kreisbogenähnlichen Verlauf nach außen zum Umfang der Scheibe hin ausgerichtet sind.

Diese Textur wird mit dem läppolierenden Automaten erreicht. Dazu werden beispielsweise die vernickelten Aluminiumsubstrate zur Beseitigung von lokalen Unebenheiten zunächst zwischen zwei mit üblichen Poliertüchern belegten Polierringen mittels eines feinkörnigen Poliermittels poliert. Nach Erreichen eines Abtrages von 2,0 bis 4,0 μm pro Seite wird zur anschließenden Texturierung ohne Unterbrechung des Rotationsvorganges anstelle des feinkörnigen Poliermittels kurzzeitig ein im Vergleich zum ersten Poliermittel gröberes Poliermittel eingesetzt.

Nach dieser Behandlung werden die texturierten Substrate in einem für die Zwecke üblichen Reinigungsgerät, wie z.B. einer Bürstmaschine mit hintereinandergeschalteten Bürst- und Sprühmodulen mit einer Reinigungsemulsion zur Reinigung und Wasser zur Entfernung der Reinigungsemulsion gereinigt und ohne zusätzliche Trocknung sofort der nachfolgenden Verkobaltung zugeführt. Die für die chemische Abscheidung der Magnetschicht auf der Basis Kobalt/Phosphor verwendeten Bäder sind bekant und vielfach beschrieben.

Die mit dem erfindungsgemäßen Verfahren erzielten Vorteile bestehen vor allem darin, daß die zur Substratherstellung nötigen Bearbeitungsschritte vermindert werden. Dadurch gelingt es, die Ausbeute bei der Substratherstellung zu erhöhen, den zur Substratherstellung nötigen Arbeits- und Maschinenaufwand zu verringern sowie die Qualität der resultierenden Dünnschichtmagnetplatten beträchtlich zu verbessern.

**Patentansprüche**

1. Verfahren zur Oberflächenbearbeitung scheibenförmiger, vernickelter Aluminiumsubstrate, welche als Trägermaterialien für die Herstellung von eine magnetisierbare Kobalt-Phosphor-Schicht aufweisende Metallschichtplatten geeignet sind, durch Polieren und Texturieren der Nickelschicht auf eine Rauhtiefe $R_t$ von 0,04 bis 0,1 μm, eine gemittelte Rauhtiefe $R_z$ von 0,04 bis 0,1 μm und einen Mittenrauhwert $R_a$ von 0,0065 bis 0,0095 μm, dadurch gekennzeichnet, daß die vernickelte Aluminiumscheibe in einem beidseitig läppolierenden Automaten mit einem Poliermittel bei einem Oberflächenabtrag von 2,0 bis 4,0 μm je Seite auf einen Mittenrauhwert $R_a$ von 0,004 bis 0,006 μm zuerst poliert wird und unmittelbar danach im gleichen Automaten texturiert wird unter Verwendung eines Poliermittels, das gegenüber dem zuerst eingesetzten die 3- bis 10-fache Körnung aufweist, zur Ausbildung einer im wesentlichen schaufelradförmigen Struktur mit dicht nebeneinanderliegenden Kratzern, die vom Zentrum des Substrates in einem Kreisbogenähnlichen Verlauf nach außen zum Umfang der Scheibe hin ausgerichtet sind.

## Claims

1. A process for the surface treatment of a disk-shaped nickel-plated aluminum substrate which is suitable as a base for the production of a metallic film disk having a magnetizable cobalt-phosphorus layer, by polishing and texturing the nickel layer to a peak-to-valley height $R_t$ of from 0.04 to 1.0 $\mu$m, an average peak-to-valley height $R_z$ of from 0.04 to 0.1 $\mu$m and a center line average value $R_a$ of from 0.0065 to 0.0095 $\mu$m, wherein nickel-plated aluminum disk is first polished with a polishing agent, in an automatic machine which laps on both sides, with removal of from 2.0 to 4.0 $\mu$m of the surface per side, to a center line average value $R_a$ of from 0.004 to 0.006 $\mu$m, and directly thereafter is textured in the same automatic machine with the use of a polishing agent which has from 3 to 10 times the particle size of that initially used, in order to form an essentially bucket wheel-shaped structure having closely adjacent scratches which are oriented from the centre of the substrate in an arc-like path outward to the circumference of the disk.

## Revendications

1. Procédé pour le traitement de surface de substrats d'aluminium nickelés, en forme de disques, qui conviennent comme matériaux supports pour la fabrication de plaques métalliques stratifiées présentant une couche cobalt-phosphore magnétisable, par polissage et texturation de la couche de nickel, à une profondeur totale de rugosité $R^t$ de 0,04 à 0,1 $\mu$m, une profondeur moyenne de rugosité $R^z$ de 0,04 à 0,1 $\mu$m et une rugosité moyenne $R^a$ de 0,0065 à 0,0095 $\mu$m caractérisé par le fait que le disque d'aluminium nickelé est d'abord poli à une profondeur moyenne de rugosité $R^a$ de 0,004 à 0,006 $\mu$m avec un agent de polissage pour un enlèvement de surface de 2,0 à 4,0 $\mu$m sur chaque face, dans une machine automatique polissant par rodage sur chaque face, et directement après est texturisé dans la même machine automatique en utilisant un agent de polissage qui, par rapport à celui utilisé en premier, présente une grosseur de grain triple à décuple pour obtenir une structure sensiblement en forme de roue à ailettes avec des éraflures étroitement accolées, qui s'alignent vers l'extérieur en direction de la périphérie du disque, en partant du centre du substrat et en suivant une courbe analogue à un arc de cercle.